(19) Europäisches Patentamt
European Patent Office
Office européen des brevets

(11) **EP 3 337 157 A1**

(12) **EUROPEAN PATENT APPLICATION**

(43) Date of publication:
**20.06.2018 Bulletin 2018/25**

(51) Int Cl.:
**H04N 5/225** (2006.01)  **H04N 5/232** (2006.01)
**H04N 5/235** (2006.01)  **G01H 9/00** (2006.01)

(21) Application number: **17205313.4**

(22) Date of filing: **05.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **15.12.2016 IN 201621039722**

(71) Applicant: **Tata Consultancy Services Limited Maharashtra (IN)**

(72) Inventors:
• **Sinharay, Arijit**
  **700160 Kolkata, West Bengal (IN)**
• **Roy, Dibyendu**
  **700160 Kolkata, West Bengal (IN)**
• **Bhowmick, Brojeshwar**
  **700160 Kolkata, West Bengal (IN)**
• **Nandi, Bhaskar**
  **700160 Kolkata, West Bengal (IN)**
• **Dasgupta, Ranjan**
  **700160 Kolkata, West Bengal (IN)**
• **Pal, Arpan**
  **700160 Kolkata, West Bengal (IN)**
• **Mukherjee, Sushovan**
  **700160 Kolkata, West Bengal (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **SYSTEM AND METHOD FOR DETECTING VIBRATIONS OF A MACHINE USING A LOW FRAMES PER SECOND (FPS) CAMERA**

(57)     A method and system for detecting vibrations of a machine using a low Frames Per Second (FPS) camera. The method includes illuminating a vibrating object with a strobe system and capturing video. Further setting the frequency to a second frequency that matches with the frequency of the vibrating object and capturing another video. Subsequently converting the videos to images and performing further analysis for computing frequency of the vibrating object.

FIG. 2

## Description

PRIORITY CLAIM

This patent application claims priority to: India Application No. 201621039722, filed on December 15, 2016.

TECHNICAL FIELD

The disclosure herein generally relate to vibrations of a machine, and more particularly, system and method for detecting vibrations of a machine using a low Frames per Second (FPS) camera.

BACKGROUND

Generally, inspection of machinery is required to examine if the machinery is functioning properly. Whenever a deterioration is detected in a machine, the deterioration has to be rectified immediately. Otherwise, the deterioration would affect the health of the complete machinery. Deterioration in a machine are generally detected using sensors that are in contact with the machine or cameras that are expensive. However, inspecting a machine that is vibrating is difficult with a sensor that is in contact with the machine, as different parts of the machine vibrate with different frequency of vibrations.

SUMMARY

Embodiments of the present disclosure present technological improvements as solutions to one or more of the above-mentioned technical problems recognized by the inventors in conventional systems. For example, in one embodiment, a method for detecting vibrations of a machine using a low Frames per Second (FPS) camera. The method includes identifying a vibrating object in a machine. Further the vibrating object is illuminated with a first frequency by the strobe system. Subsequently, first video is captured of the vibrating object. Further, the frequency of the strobe system is set from first frequency to second frequency based on the analysis of the first video, such that the second frequency matches with the frequency of the vibrating object. Subsequently, second video is captured of the vibrating object. Further, frequency of the vibrating object is determined based on the analysis of the first video and the second video.

In another embodiment, a system for thermal monitoring and providing advisory control for ladle operations is disclosed. The system includes at least one processor, and a memory communicatively coupled to the at least one processor, wherein the memory comprises of several modules. The modules include vibrations detecting module that identifies a vibrating object in a machine. Further the vibrating object is illuminated with a strobe system with a frequency of the first frequency. Subsequently, first video is captured of the vibrating object. Further, the frequency of the strobe system is set from first frequency to second frequency based on the analysis of the first video, such that the second frequency matches with the frequency of the vibrating object. Subsequently, second video is captured of the vibrating object. Further, frequency of the vibrating object is determined based on the analysis of the first video and the second video.

It is to be understood that both the foregoing general description and the following detailed description are explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for detecting vibrations of a machine using a low Frames Per Second (FPS) camera, according to some embodiments of the present subject matter;
FIG. 2 is a block diagram of an architecture of a strobe system illuminating a machine, according to some embodiment of the present subject matter; and
FIG. 3 is a flow chart illustrating a method for detecting vibrations of a machine using the low frames per second (FPS) camera, according to some embodiment of the present subject matter.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

In one aspect, a method for detecting vibrations of a machine using low Frames Per Second (FPS) camera is disclosed. The method includes illuminating a vibrating object using a strobe system with an unknown frequency. Further, setting the frequency of the strobe system from first frequency to second frequency such that the second frequency matches with the frequency of the vibrating object and further capturing the video of the vibrating object. Subsequently the two videos are converted to images and objects are tracked to determine the difference in the objects. If there is no significant difference, the frequency is increased. However, if there is a significant difference in the objects of the images, frequency components is measured by obtaining the frequency spectrum of the tracking object using a Fast Fourier Transform (FFT) algorithm. Based on the frequency spectrum, frequency value of the tracking object is determined.

The manner in which the described system is implemented to evaluate reviewer's ability to provide feedback has been explained in detail with respect to the following figure(s). While aspects of the described system can be implemented in any number of different computing systems, transmission environments, and/or configurations, the embodiments are described in the context of the following exemplary system.

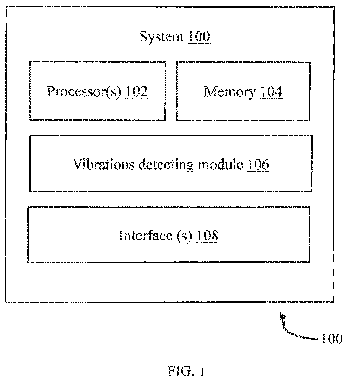

FIG. 1 schematically illustrates a system 100 for detecting vibrations in a vibrating object using a low FPS camera, according to an embodiment of the present disclosure. As shown in FIG. 1, the system 100 includes one or more processor(s) 102 and a memory 104 communicatively coupled to each other. The memory 104 includes a vibrations detecting module 106 that detects frequency of vibrations of a vibrating object in a machine using the low FPS camera. The system 100 also includes interface(s) 108. Although FIG. 1 shows example components of the system 100, in other implementations, the system 100 may contain fewer components, additional components, different components, or differently arranged components than depicted in FIG. 1.

The processor(s) 102 and the memory 104 may be communicatively coupled by a system bus. The processor(s) 102 may include circuitry implementing, among others, audio and logic functions associated with the communication. The processor 102 may include, among other things, a clock, an arithmetic logic unit (ALU) and logic gates configured to support operation of the processor(s) 102. The processor(s) 102 can be a single processing unit or a number of units, all of which include multiple computing units. The processor(s) 102 may be implemented as one or more microprocessors, microcomputers, microcontrollers, digital signal processors, central processing units, state machines, logic circuitries, and/or any devices that manipulate signals based on operational instructions. Among other capabilities, the processor(s) 102 is configured to fetch and execute computer-readable instructions and data stored in the memory 104.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional, and/or custom, may also be included.

The interface(s) 108 may include a variety of software and hardware interfaces, for example, interfaces for peripheral device(s), such as a keyboard, a mouse, an external memory, and a printer. The interface(s) 108 can facilitate multiple communications within a wide variety of networks and protocol types, including wired networks, for example, local area network (LAN), cable, etc., and wireless networks, such as Wireless LAN (WLAN), cellular, or satellite. For the purpose, the interface(s) 108 may include one or more ports for connecting the system 100 to other network devices.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 104, may store any number of pieces of information, and data, used by the system 100 to detect vibrations of a machine. The memory 104 may be configured to store information, data, applications, instructions or the like for system 100 to carry out various functions in accordance with various example embodiments. Additionally or alternatively, the memory 104 may be configured to store instructions which when executed by the processor 102 causes the system 100 to behave in a manner as described in various embodiments. The memory 104 includes the vibrations detecting module 106 and other modules. The module 106 include routines, programs, objects, components, data structures, etc., which perform particular tasks or implement particular abstract data types.

The present disclosure discloses a method for detecting vibrations of a machine using a low FPS camera. The method includes identifying a vibrating object in a machine. The vibrating object is illuminated by a strobe system with a first frequency. Further, a video is captured using a 30 FPS camera. Further, the frequency of the strobe system is changed from first frequency to a second frequency. The frequency of the strobe system is changed from the first frequency to the second frequency such that the second frequency matches the frequency of the vibrating object so that a second video of the vibrating object can be captured.

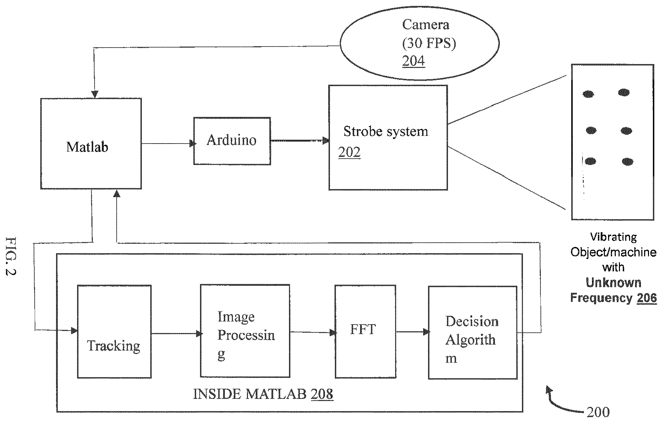

FIG. 2 is a block diagram of an architecture of the strobe system illuminating a machine, according to some embodiment of the present subject matter. The architecture consists of a machine or a vibrating object 206, for which the vibrations are to be detected. Further the vibrating object 206 is illuminated by a strobe light 202.

Further a first video is captured using a low Frames Per Second (FPS) camera 204 and sent to a simulator 208 (e.g., MATLAB 208) for further analysis. Based on the further analysis, a second video is captured. The analysis of the first video and the second video is explained in the following description.

In an embodiment, one or more vibration cycles of the vibrating object 206 in a machine are detected from the first video and the second video. Further to analyze and track the vibrating object 206 from the first video and the second video, the first video is converted to a first set of images and the second video is converted to a second set of images, wherein each of the first set and the second set may comprise one or more images. The analysis to track the vibrating object 206 from the first set of images includes determining a first frequency spectrum of the first set of images. Similarly, a second frequency spectrum of the second set of images is also determined. Further a first peak is determined from the first frequency spectrum and a second peak is determined from the second frequency spectrum. Subsequently, an integer quotient of the first frequency is determined from the first peak and the second peak. Further, a multiplicative product of the integer quotient and the first frequency is computed. The multiplicative product is added to the first peak to determine the frequency of the vibrating object 206. The following equation gives the object frequency.

$$W_o = a \times w_s + m$$

The following computations give the method for determining the frequency of the vibrating object 206. The overall system can be represented in terms of per frame time period in the following equation,

$$\left\{\frac{w_o}{f}\right\} = a \times \left\{\frac{w_s}{f}\right\} + \left\{\frac{m}{f}\right\}$$

Here, the object frequency is $w_o$ and the frequency of the strobe system 202 is $w_s$, $f$ stands for frames per second, $m, n$ are remainder (or modulo) in strobe, 'a' is an integer quotient in strobe. The $\left\{\frac{m}{f}\right\}$ gives a phase difference per frame, $\left\{\frac{w_s}{f}\right\}$ gives the number of strobe per frame.

Therefore $\left\{\frac{m}{w_s}\right\}$ is the phase difference per strobe.

If $\left\{\frac{m}{f}\right\} \geq 1$, extractability of the vibrating object is low because within the duration of a frame, the object is moving through whole of the trajectory in the vibration cycle, hence, the position of the object is covering whole of the target domain in picture. Therefore, it becomes futile to present the object by means of a single position. This may be suggestive of bringing $w_s < f$. However, if $w_s$ is too low, lack of precision is manifested. Moreover, for a low value of $w_s$, duty cycle has to be high, such that the light is switched on for an adequate duration to maintain sufficient illumination, which in turn increases motion blur. On the other hand, if $w_s$ is too high, $a$ becomes zero, rendering the remainder, $m$ still high. The challenge lies in obtaining a frequency $w_s$ that allows for computing a value $m$. Subsequently for a value of $w_o$, if $w_{s1}$ (second frequency) is a value that gives a certain value of '$m$', the value of integer quotient, $a$ is computed.

In order to calculate value of '$a$', the strobe frequency is increased by a small amount $\Delta$.

$$\text{So, } w_o = a_1\left(w_{s1} + \Delta\right) + m_1$$

Presuming $a_1 = a$, we have

$$a \times w_{s1} + m = a\left(w_{s1} + \Delta\right) + m_1$$

$$a = \frac{\left(m_1 - m\right)}{\Delta}$$

To check whether the value of $a$ has not changed, the value of $w_s$ is further increased by an amount $\Delta$ to give

$$w_o = a\left(w_{s1} + 2\Delta\right) + m_2$$

After the object frequency is determined, integer quotient is determined, using the following equation:

$$a\left(w_{s1} + \Delta\right) + m_1 = a\left(w_{s1} + 2\Delta\right) + m_2$$

$$a = \frac{\left(m_2 - m_1\right)}{\Delta}$$

The value of the integer quotient "a" is examined before and after the value of ws is increased.

$$\frac{\left(m_2 - m_1\right)}{\Delta} = \frac{\left(m_1 - m\right)}{\Delta}$$

If the value remains unchanged, the frequency of the vibrating object 206 can be determined.

In an example embodiment, a tuning fork with frequency of vibration 341.3 Hertz (Hz) is utilized for an experiment. The frequency of the strobe system is starting from random value that is decided by the algorithm. In the present experiment, the frequency is taken as 61 Hz. The camera is expected to not measure the vibrating frequency at the strobe. Therefore, the strobe frequency needs to be increased by a (sufficient or certain) amount. At strobe frequency 82.3 Hz, it is observed that the peak frequency is 11.506 Hz. For every 1 Hz strobe frequency increase, the peak frequency is approximately shifted by 4 Hz. Table 1 gives the experimental details of the variations in peak frequency for every 1 Hz strobe frequency increase. From this frequency peak, the algorithm disclose in the present embodiment can measure the vibrating frequency of the tuning fork accurately. In the present experiment, duty cycle plays a major role for sub-multiple frequency detection. The present disclosure considers 5% of duty cycle for all strobe frequencies.

Table 1

| Strobe Frequency (in Hz) | Peak Frequency (in Hz) |
|---|---|
| 82.3 | 11.506 |
| 83.3 | 7.508 |
| 84.3 | 3.51 |
| 85.3 | 0.018 |
| 86.3 | 4.583 |
| 87.3 | 8.582 |

Similarly, when the frequency is at 328 Hz, the frequency peak spectrum is at 14.833. In such situation if the frequency is increased by 1 Hz, then the peak frequency is shifting by 1 Hz. The detail experimental results are provided in Table 2.

Table 2

| Strobe Frequency (in Hz) | Peak Frequency (in Hz) |
|---|---|
| 328 | 14.833 |
| 329 | 13.320 |
| 330 | 12.291 |
| 3.31 | 10.898 |
| 332 | 10.096 |
| 333 | 8.294 |
| 334 | 6.981 |
| 335 | 6.0134 |
| 336 | 5.328 |
| 337 | 4.345 |

(continued)

| Strobe Frequency (in Hz) | Peak Frequency (in Hz) |
|---|---|
| 338 | 3.126 |
| 339 | 2. 165 |
| 340 | 1.33 |
| 341 | 0.432 |

In the present experiment, it is observed that, a tuning fork of vibrating frequency 341.3 Hz is strobed at 84.6 Hz. The peak frequency observed from FFT algorithm is 2.846 Hz. Similarly when the same system is strobed at 336.7 Hz, then the peak frequency observed is 4.541 Hz. Based on the above results, the algorithm proposed in the present disclosure can measure the frequency of vibration.

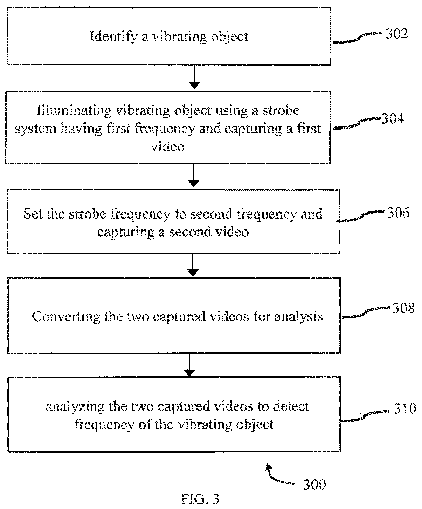

FIG. 3 is a flow chart illustrating a method for detecting vibrations of a machine using a low Frames per Second (FPS) camera, according to some embodiment of the present disclosure. At block 302, a vibrating object 206 is identified for which frequency is to be determined. At block 304, vibrating object 206 is illuminated using the strobe system 202 wherein a first video is captured with the strobe system 202 having a first frequency. Further at block 306, the frequency of the strobe system 202 is set from the first frequency to a second frequency such that the second frequency matches with the frequency of the vibrating system/object 206. Subsequently, a second video is captured with the strobe system at block 306. Further at block 308, each of the two captured videos are converted to images for analyzing the images and detecting the frequency of the vibrating object 206.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant arts based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method for determining vibrations of a machine using a low frames per second (FPS) camera comprising:

   identifying a vibrating object in a machine;
   illuminating the vibrating object with a first frequency by strobe system
   capturing, using the low FPS camera, a first video of the vibrating object;
   setting the strobe system from the first frequency to a second frequency based on the analysis of the first video such that the second frequency matches a frequency of the vibrating object for efficiently capturing a second video of the vibrating object;
   capturing, using the low FPS camera having the second frequency, the second video of the vibrating object; and
   computing a frequency of the vibrating object based on analysis being performed on the first video and the second video.

2. The method according to claim 1, further comprising detecting one or more vibration cycles of the vibrating object from the first and the second video.

3. The method according to claim 1, wherein the first video is converted into a first set of one or more images for analysis to track the vibrating object from the first set of one or more images and the second video is converted into a second set of one or more images for analysis to track the vibrating object from the second set of one or more images.

4. The method according to claim 3, wherein performing the analysis comprises (i) determining a first peak in a frequency spectrum of the vibrating object from the first set of one or more images and (ii) determining a second peak in a frequency spectrum of the vibrating object from the second set of one or more images.

5. The method according to claim 4, wherein performing the analysis further comprises of computing an integer quotient of the first frequency from the first peak and the second peak.

6. The method according to claim 5, wherein the step of computing the frequency of vibration of the vibrating object comprises adding the first peak to a multiplicative product of the integer quotient and the first frequency.

7. A system for detecting vibrations of a machine using a low Frames Per Second (FPS) camera:

at least one processor; and

a memory communicatively coupled to the at least one processor, wherein the memory comprises

a vibrations detecting module to :

identify a vibrating object in a machine;

illuminate the vibrating object with a first frequency by strobe system;

capture, using the low FPS camera, a first video of the vibrating object;

set the strobe system from the first frequency to a second frequency based on analysis of the first video, such that the second frequency matches a frequency of the vibrating object for efficiently capturing a second video of the vibrating object;

capture, using the low FPS camera having the second frequency, the second video of the vibrating object; and

compute a frequency of the vibrating object from the first video and the second video of the vibrating object based on analysis of the first video and the second video.

8. The system according to claim 7, further comprising detecting one or more vibration cycle of the vibrating object from the first video and the second video.

9. The system according to claim 7, wherein the first video is converted into a first set of one or more images for analysis to track the vibrating object from the first set of one or more images and the second video is converted into a second set of one or more images for analysis to track the vibrating object from the second set of one or more images.

10. The system according to claim 9, wherein performing the analysis comprises (i) determining a first peak in a frequency spectrum of the vibrating object from the first set of one or more images and (ii) determining a second peak in a frequency spectrum of the vibrating object from the second set of one or more images.

11. The system according to claim 10, wherein performing the analysis further comprises of computing an integer quotient of the first frequency from the first peak and the second peak.

12. The system according to claim 11, wherein the step of computing the frequency of vibration of the vibrating object comprises adding the first peak to the multiplicative product of the integer quotient and the first frequency.

13. A non-transitory computer readable medium embodying a program executable in a computing device , the program comprising:

a program code for identifying a vibrating object in a machine;

illuminating the vibrating object with a first frequency by a strobing system;

capturing, using the low FPS camera, a first video of the vibrating object;

setting the strobe system from the first frequency to a second frequency based on the analysis of the first video such that the second frequency matches a frequency of the vibrating object for efficiently capturing a second video of the vibrating object;

capturing, using the low FPS camera having the second frequency, the second video of the vibrating object; and

computing a frequency of the vibrating object based on analysis being performed on the first video and the second video.

System 100

Processor(s) 102

Memory 104

Vibrations detecting module 106

Interface (s) 108

100

FIG. 1

FIG. 2

Camera
(30 FPS)
204

Matlab

Arduino

Strobe system
202

Vibrating
Object/machine
with
**Unknown**
**Frequency 206**

Tracking

Image
Processin
g

FFT

Decision
Algorith
m

INSIDE MATLAB 208

200

```
┌─────────────────────────────────────────┐
│        Identify a vibrating object       │────  302
└─────────────────────────────────────────┘
                    │
                    ▼
┌─────────────────────────────────────────┐
│   Illuminating vibrating object using a  │
│ strobe system having first frequency and │────304
│       capturing a first video           │
└─────────────────────────────────────────┘
                    │
                    ▼
┌─────────────────────────────────────────┐
│ Set the strobe frequency to second       │
│ frequency and capturing a second video   │────306
└─────────────────────────────────────────┘
                    │
                    ▼
┌─────────────────────────────────────────┐
│    Converting the two captured videos    │────308
│             for analysis                 │
└─────────────────────────────────────────┘
                    │
                    ▼
┌─────────────────────────────────────────┐
│  analyzing the two captured videos to    │
│   detect frequency of the vibrating      │────310
│             object                       │
└─────────────────────────────────────────┘
                                    ┘──── 300
```

FIG. 3

Europäisches
Patentamt

European
Patent Office

Office européen
des brevets

## EUROPEAN SEARCH REPORT

Application Number

EP 17 20 5313

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROY DIBYENDU ET AL: "An autonomous, non-invesive vibration measurement system using stroboscope", 2016 10TH INTERNATIONAL CONFERENCE ON SENSING TECHNOLOGY (ICST), IEEE, 11 November 2016 (2016-11-11), - 13 November 2016 (2016-11-13), pages 1-6, XP033028745, DOI: 10.1109/ICSENST.2016.7796244 [retrieved on 2016-12-22] * page 1 - page 6 * ----- | 1-13 | INV. H04N5/225 H04N5/232 H04N5/235 G01H9/00 |
| X | DIBYENDU ROY, SUSHOVAN MUKHERJEE, TAPAS CHAKRAVARTY, ARIJIT SINHARAY, AVIK GHOSE, ARPAN PAL: "Shake meter : An Autonomous Vibration Measurement System using Optical Strobing: Demo Abstract", PROCEEDINGS OF THE 14TH ACM CONFERENCE ON EMBEDDED NETWORK SENSOR SYSTEMS CD-ROM, SENSYS '16, 14 November 2016 (2016-11-14), - 16 November 2016 (2016-11-16), pages 294-295, XP055471628, New York, New York, USA DOI: 10.1145/2994551.2996529 ISBN: 978-1-4503-4263-6 * page 1 - page 2 * ----- | 1-4, 7-10,13 | |
| A | US 2012/019654 A1 (VENKATESAN VARUN AKUR [IN] ET AL) 26 January 2012 (2012-01-26) * paragraph [0037] - paragraph [0053] * * figures 1-6 * ----- | 1-13 | TECHNICAL FIELDS SEARCHED (IPC) H04N G01H G01B |

The present search report has been drawn up for all claims

| Place of search | Date of completion of the search | Examiner |
|---|---|---|
| The Hague | 2 May 2018 | Rocca, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 5313

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2018

| Patent document cited in search report | Publication date | Patent family member(s) | Publication date |
|---|---|---|---|
| US 2012019654 A1 | 26-01-2012 | CN 102301212 A<br>EP 2384423 A1<br>JP 5368583 B2<br>JP 2012516432 A<br>US 2012019654 A1<br>WO 2010086044 A1 | 28-12-2011<br>09-11-2011<br>18-12-2013<br>19-07-2012<br>26-01-2012<br>05-08-2010 |

EPO FORM P0459

For more details about this annex : see Official Journal of the European Patent Office, No. 12/82

**REFERENCES CITED IN THE DESCRIPTION**

**Patent documents cited in the description**

• IN 201621039722